# EUROPÄISCHE PATENTSCHRIFT

(11) **EP 0 936 199 B1**
(45) Veröffentlichungstag und Bekanntmachung des Hinweises auf die Patenterteilung: **04.06.2003**
(21) Anmeldenummer: 98114265.6
(22) Anmeldetag: 30.07.1998
(51) Int. Cl.: C04B 14/38, C04B 30/02

(54) **Verfahren zur Herstellung vakuumgeformter feuerfester Formteile und Isolierkörper zur Hochtemperaturisolierung**
Process for the manufacture of vacuum-formed refractories and insulating bodies for high temperature insulation
Procédé pour la fabrication sous vide de réfractaires et de corps isolants pour l'isolation à haute température

(30) Priorität: 16.02.1998 AT 27098
(43) Veröffentlichungstag der Anmeldung: 18.08.1999
(73) Patentinhaber: ALFATEC Feuerfest-Faser-Technik Ges.m.b.H., 3124 Oberwölbling (AT)
(72) Erfinder: Haberreiter, Johann, Ing., 3121 Karlstetten (AT)
(74) Vertreter: Puchberger, Peter, Dipl.-Ing.

(56) Entgegenhaltungen:
- EP-A- 0 730 896
- DE-A- 1 929 596
- GB-A- 2 259 700
- US-A- 3 804 701

## Beschreibung

Die Erfindung betrifft ein Verfahren zur Herstellung vakuumgeformter feuerfester Formteile zum Zweck der Hochtemperaturisolierung bis 1.250°C Anwendungstemperatur, sowie einen danach ausgebildeten Isolierkörper.

Vakuumgeformte isolierende Formteile für hohe Temperaturen werden derzeit aus künstlich hergestellten Keramikfasern hergestellt. Keramikfasern wurden als Asbestersatz vor ca. 40 Jahren entwickelt. Mittlerweile sind jedoch auch Keramikfasern in den Verdacht geraten, eine krebserzeugende Wirkung auf den Menschen ausüben zu können. Als Folge hat die Europäische Union die Keramikfaser bzw. daraus hergestellte Produkte von der bisherigen internationalen Stufe K3 in die Stufe K2 (Asbest ist in K1) aufgestuft.

Weiters ist es bekannt, Isolierstoffe in Form von Platten und einfachen zumeist rotationssymmetrischen Formteilen aus künstlich hergestelltem Calciumsilikat einzusetzen. Dabei werden Kalk oder Calciumhydroxid mit Kieselsäure naß vermischt und in eine Form gegossen. Anschließend werden durch hydrothermale Umwandlung in einem Autoklaven Calciumsilikatkristalle (z.B. Tobermorit oder Xonotlit) hergestellt. Wenn Wollastonitkristalle künstlich hergestellt werden sollen, muß der Xonotlitkristallbrei getrocknet, bei 800 bis 1.000°C gebrannt und anschließend wieder Wasser hinzugefügt werden, um einen gußfähigen Brei herzustellen. Dies erfordert einen hohen Verfahrensaufwand und hohe Energien. Überdies sind derartige Calciumsilikatprodukte nur bis maximal 1.100°C einsetzbar, nicht aber für höhere Temperaturen. Weiters können dreidimensionale kompliziertere Formteile nicht als Einheit hergestellt werden. Bei der Technologie mit Autoklaven sind z.B. Rohre nur als Halbschalen herstellbar. Die bekannten Isolierkörper weisen auch eine relativ hohe Trockenschwindung auf, die nachteilig ist.

Weiters ist es bekannt, Wollastonit als Verstärkungsfasern in Kombination mit Zementen einzusetzen. Derartige Körper werden nach dem Saug-Pressverfahren hergestellt und sie weisen ein hohes Raumgewicht auf, wodurch die thermische Isolierung ungenügend ist. Die praktische Anwendung liegt hier in der Verwendung als Dachplatten und nicht zum Zweck der Isolierung.

Aus der US-PS 3 804 701 ist die Verwendung von Wollastonit in einer Heißkopfisolierung für den Kokillenguß bekannt geworden. Es handelt sich dabei hauptsächlich um eine verschleißfeste Ausrüstung und nicht in erster Linie um eine Hochtemperaturisolierung. Der Wollastonit kann in der Heißkopfisolierung in faseriger oder in Pulverform eingesetzt werden. Als Bindemittel werden Phenole und Formaldehyde genannt. Mit dieser Technologie werden Wandstärken bis 1 ¼ (vgl. Spalte 1, Zeile 60) bzw. bis max. 1 ¾ Zoll (vgl. Spalte 2, Zeile 5) erzielt.

Aus der EP 730 896 A1 ist die Verwendung von Wollastonit zur Herstellung von Heißgasfilterelementen bekannt geworden. Das Wollastonit dient dabei vornehmlich der Erhöhung der mechanischen Festigkeit des Filterlementes, was für derartige Elemente wichtig ist. Zustäzlich sind bevorzugt Kermikfasern enthalten. Das Filterelement ist lediglich bis 1000° C einsetzbar.

Die Druckschrift gibt keinerlei Anregung dahingehend, wie ein keramikfaserfreier Formteil mit einem Raumgewicht < 0,8g/cm³ zum Zweck der Hochtemperaturisolierung geschaf-fen werden kann.

Die gegenständliche Erfindung hat sich die Aufgabe gestellt, isolierende Formteile zu schaffen, die bis zu einer Daueranwendungstemperatur von 1.250°C eingesetzt werden können. Die Formteile sollen ein niedriges Raumgewicht < 0,8 g/cm³ aufweisen, sowie über geringe Schwindung und niedrige Wärmeleitzahlen auch bei Temperaturen über 1000° C verfügen. Weiters soll das Material gesundheitlich unbedenklich sein. Überdies soll die Herstellung einfach und billig sein.

Das erfindungsgemäße Verfahren wird durch Anspruch 7 beschrieben. Der erfindungsgemäße Isolierkörper ist durch Anspruch 1 beschrieben.

Weitere Merkmale sind den Ansprüchen und der nachfolgenden Beschreibung zu entnehmen.

Gemäß Erfindung können dem Wollastonit, bevorzugt natürlichem Wollastonit mit einem Verhältnis Länge zu Durchmesser von mindestens 10:1, weitere anorganische Füllfasern beigegeben werden.

Es werden nur solche Rohstoffe verwendet, welche folgende Eigenschaften haben:
a) wissenschaftlich nachgewiesene Unbedenklichkeit;
b) die Formteile sind unter Anwendung der Vakuumformtechnologie herstellbar;
c) die isolierenden Eigenschaften reichen bis 1.250°C Anwendungstemperatur und die Dichte des Formkörpers liegt unter 0,8 g/cm³, bevorzugt unter 0,5 g/cm³.

Wollastonit mit dem angegebenen Verhältnis Länge zu Durchmesser ist bevorzugt natürlich vorkommender Wollastonit. Er wird bevorzugt gemeinsam mit anorganischen nicht lungengängigen Fasern oder mit anorganischen (Glas-) Fasern verwendet deren Anteil an Alkalioxiden und/oder Erdalkalioxiden > 18 Gew.% ist. Unter nicht lungengängig bezeichnet die WHO solche Fasern, welchen einen Faserdurchmesser > 3 µ haben. Andere Faserrohstoffe mit einem Anteil von Alkalioxiden und/oder Erdalkalioxiden > 18 Gew.% werden wegen der hohen Biolöslichkeit als nicht gesundheitsgefährdend für den Menschen angesehen, da sie lediglich eine kurze Verweildauer im menschlichen Körper haben.

Das Bindemittel kann anorganisch oder organisch oder ein Gemisch aus anorganischem und organischem Bindemittel sein. Als anorganisches Bindemittel werden vorteilhaft Kieselsole (Siliziumhydroxidlösung) oder Alusole (Aluminiumhydroxidlösung) in wässriger Lösung und als organisches Bindemittel wässrige Stärkelösungen eingesetzt. Wässrige Stärkelösungen sind z.B. aus der Papierindustrie bekannt.

Der Anteil der Füllfasern im getrockneten Formteil beträgt vorteilhafterweise maximal 40 Gew.%. Die Feststoffkonzentration des Slurrys im Mischertank oder in der Formgebungswanne beträgt bevorzugt 1 bis 10 Gew.%., besonders bevorzugt 3 bis 6 Gew.%. Der Anteil des Bindemittels im getrockneten Formteil kann bevorzugt zwischen 10 und 40 Gew.% liegen.

Die Aushärtung der erfindungsgemäß hergestellten Formteile erfolgt durch Trocknung bei Temperaturen zwischen 100°C und 200°C, wobei es günstigerweise zu einer keramischen Abbindung kommt.

Beim Absaugen der Flüssigkeit mittels Vakuumtechnologie wird bevorzugt ein Unterdruck kleiner/gleich 1 bar angewendet, wobei keine Pressung erfolgt.

Der so hergestellte Formteil bildet einen Isolierkörper zur Hochtemperaturisolierung bis 1.250°C. Im getrockneten Zustand besitzt er eine Dichte < 0,8 g/cm³, bevorzugt < 0,5 g/cm³. Der getrocknete Formteil enthält mindestens 30 Gew.% Wollastonit.

### Herstellungsbeispiel:

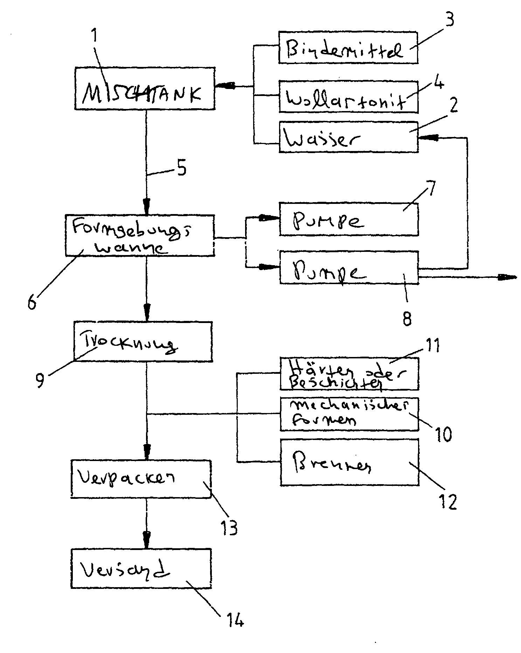

Auf die Figur wird hiermit Bezug genommen.

In einem Mischtank 1 werden Wasser 2, anorganische und/oder organische Bindemittel 3 und Wollastonit 4 vermengt, und gegebenenfalls die Füllfasern zugesetzt. Die Feststoff-5 konzentration beträgt bevorzugt 1 bis 10 Gew.%, vorzugsweise 3 bis 6 Gew.%. Der fertige Brei (Slurry 5) wird in die Formgebungswanne 6 eingefüllt. In den Slurry werden nach bekannter Technologie poröse Saugwerkzeuge eingetaucht, die üblicherweise aus feinporigen Lochblechen oder feinmaschigen Sieben bestehen. Der Unterdruck wird durch Vakuumpumpen 7 erzeugt und das Wasser über die Pumpe 8 ab- oder rückgeführt. Alternativ kann die Slurry in eine Form gegossen und die Flüssigkeit abgesaugt werden.

Nach Erreichen der in der Formgebungswanne gewünschten Wandstärke mittels Vakuum und Verweildauer werden die geformten Produkte aus der Form entnommen und bei einer Temperatur zwischen 100°C und 200°C getrocknet (9). Durch die eingesetzten Bindemittel kommt es mittels keramischer Bindung zu einer irreversiblen Aushärtung.

Nach dem Trocknungsvorgang werden die Formteile entweder weiter bearbeitet oder veredelt, bzw. in unbearbeiteter Form verpackt. Die Bearbeitung umfaßt beispielsweise mechanisches Formen 10, Härten oder Beschichten 11 oder Brennen 12 bei erhöhter Temperatur, um den Anteil organischer Stoffe oder das Schwinden zu reduzieren. Nach dem Verpacken 13 folgt der Versand 14.

### Beispiele für Wollastonitformteile:

1) Beispiel Wollastonitformteile

| | |
|---|---|
| 87 Gew.% | Wollastonit |
| 13 Gew.% | Kieselsol |

Hergestellt als 2,5 %ige Slurry und mit 4 %iger Stärkelösung ausgeflockt.
Chemische Analyse des Formteiles berechnet aus den eingesetzten Rohstoffen:

| | |
|---|---|
| 45,9 Gew.% | CaO |
| 54,1 Gew.% | SiO₂ |

Organische Bestandteile 1, 5 - 2 Gew.%
Raumgewicht 0,55 - 0,65 g/cm³
Längsschwindung bei 1.100°C 0,2 - 0, 8 %
Wärmeleitfähigkeit bei 1.000°C 0,28 W/mK

2) Beispiel Wollastonitformteil mit Filamentfasern

| | |
|---|---|
| 81 Gew.% | Wollastonit |
| 15 Gew.% | Kieselsol |
| 4 Gew.% | Filamentfaser mit 95 Gew.% SiO₂, Faserdurchmesser 6-15 µ. |

Hergestellt als 3 %ige Slurry und mit 5 %iger Stärkelösung ausgeflockt.
Chemische Analyse des Formteiles berechnet aus den eingesetzten Rohstoffen:

| | |
|---|---|
| 44,4 Gew.% | CaO |
| 0,1 Gew.% | Al₂O₃ |
| 55,5 Gew.% | AiO₂ |

Raumgewicht 0,35 - 0,45 g/cm₃
Längsschwindung bei 1.100°C 0,6 - 1,7 %
Wärmeleitfähigkeit bei 600°C 0,20 W/mK

3) Beispiel Wollastonitformteil mit Filmentfaser

| | |
|---|---|
| 73 Gew.% | Wollastonit |
| 19 Gew.% | Kieselsol |
| 8 Gew.% | Filamentfaser mit 54 % SiO₂, Faserdurchmesser 6-20 µ |

Hergestellt als 4 %ige Slurry und mit 4 %iger Stärkelösung ausgeflockt.
Chemische Analyse:

| | |
|---|---|
| 41,7 Gew.% | CaO |
| 1,5 Gew.% | Al₂O₃ |
| 0,7 Gew.% | B₂O₃ |
| 56,1 Gew.% | SiO₂ |

Raumgewicht 0,25 - 0,30 g/cm₃
Längsschwindung bei 1.100°C 0,8 - 1,1 %
Wärmeleitfähigkeit bei 800°C 0,24 W/mK

## Patentansprüche

1. Isolierkörper zur Hochtemperaturisolierung bei bis zu 1250°C, der aus, bevorzugt natürlichem, Wollastonit mit nadeliger fasriger Kristallform, einem Bindemittel und gegebenenfalls anorganischen Füllfasern besteht und in getrocknetem Zustand eine Dichte < 0,8 g/cm³, bevorzugt < 0,5 g/cm³ aufweist, **dadurch gekennzeichnet, daß** der Anteil des Bindemittels im getrockneten Formteil bevorzugt zwischen 10 und 40 Gew.% beträgt und dieser Bindemittelgehalt aus einer Kombination von Kieselsolen oder Alusolen in wässeriger Lösung mit Zusatz eines organischen Bindemittels in Form einer wässerigen Stärkelösung nach Aushärtung des Isolierkörpers, vorzugsweise unter keramischer Abbindung, entstanden ist.

2. Isolierkörper nach Anspruch 1, **dadurch gekennzeichnet, daß** das Verhältnis Länge zu Durchmesser der Wollastonitfasern mindestens 10:1 beträgt.

3. Isolierkörper nach Anspruch 1 oder 2, **dadurch gekennzeichnet, daß** der getrocknete Formteil mindestens 30 Gew.% Wollastonit enthält

4. Isolierkörper nach einem der Ansprüche 1 bis 3, **dadurch gekennzeichnet, daß** die Fullfasern nicht lungengängige Filamentfasern mit Durchmesser = oder > 6 µ sind.

5. Isolierkörper nach einem der Ansprüche 1 bis 4, **dadurch gekennzeichnet, daß** die Füllfasern anorganische Fasern mit mehr als 18 Gew.% Anteil von Alkalioxide und/oder Erdalkalioxide sind.

6. Isolierkörper nach einem der Ansprüche 1 bis 5, **dadurch gekennzeichnet, daß** der Anteil der Füllfasern im getrockneten Formteil maximal 40 Gew.% beträgt.

7. Verfahren zur Herstellung vakuumgeformter feuerfester Formteile mit einem Raumgewicht < 0,8 g/cm³ zum Zweck der Hochtemperaturisolierung bei bis zu 1250°C Anwendungstemperatur, wie es insbesondere zur Herstellung von Isolierkörpern nach einem oder mehreren der Ansprüche 1 bis 6 geeignet ist, wobei Wollastonit (Ca₃[Si₃O₉]) mit nadeliger fasriger Kristallform mit Wasser und einem Bindemittel zu einem Slurry vermischt, in eine Form gefüllt, die Flüssigkeit abgesaugt und der so gebildete Formteil getrocknet wird, **dadurch gekennzeichnet, daß** als Bindemittel Kieselsole oder Alusole in wässeriger Lösung mit Zusatz eines organischen Bindemittels in Form einer wässerigen Stärkelösung eingesetzt werden.

8. Verfahren nach Anspruch 7, **dadurch gekennzeichnet, daß** dem Wollastonit oder Slurry weitere anorganische Füllfasern beigegeben werden.

9. Verfahren nach Anspruch 7 oder 8, **dadurch gekennzeichnet, daß** das Verhältnis Länge zu Durchmesser der Wollastonitfasern mindestens 10:1 beträgt.

10. Verfahren nach einem der Ansprüche 7 bis 9, **dadurch gekennzeichnet, daß** der getrocknete Formteil mindestens 30 Gew.% Wollastonit enthält.

11. Verfahren nach einem der Ansprüche 7 bis 10, **dadurch gekennzeichnet, daß** als Füllfasern nicht lungengängige Filamentfasern mit Durchmesser = oder > 6 µ gemeinsam mit Wollastonit eingesetzt werden.

12. Verfahren nach einem der Ansprüche 7 bis 11, **dadurch gekennzeichnet, daß** als Füllfasern anorganische Fasern mit mehr als 18 Gew.% Anteil von Alkalioxide und/oder Erdalkalioxide eingesetzt werden.

13. Verfahren nach einem der Ansprüche 7 bis 12, **dadurch gekennzeichnet, daß** der Anteil der Füllfasern im getrockneten Formteil maximal 40 Gew.% beträgt.

14. Verfahren nach einem der Ansprüche 7 bis 13, **dadurch gekennzeichnet, daß** die Aushärtung der Formteile durch Trocknung bei Temperaturen zwischen 100°C und 200°C und bevorzugt eine keramische Abbindung erfolgt.

15. Verfahren nach einem der Ansprüche 7 bis 14, **dadurch gekennzeichnet, daß** das Absaugen der Flüssigkeit mittels Vakuumtechnologie bei einem Unterdruck kleiner/gleich 1 bar ohne Pressung erfolgt.

16. Verfahren nach einem der Ansprüche 7 bis 15, **dadurch gekennzeichnet, daß** die Feststoffkonzentration des Slurrys in dem Mischertank/Formgebungswanne 1 bis 10 Gew.%, vorzugsweise 3 bis 6 Gew. % beträgt.

17. Verfahren nach einem der Ansprüche 7 bis 16, **dadurch gekennzeichnet, daß** der Anteil des Bindemittels im getrockneten Formteil zwischen 10 und 40 Gew.% liegt.

## Claims

1. Insulating body for high-temperature insulation at up to 1250°C, which consists of preferably natural wollastonite with an acicular, fibrous crystal form, a binder and if appropriate inorganic filler fibres, and which in the dried state has a density of < 0.8 g/cm³, preferably < 0.5 g/cm³, **characterized in that** the binder content in the dried shaped part is preferably between 10 and 40% by weight, and this binder content has been formed from a combination of silica sols or alumina sols in aqueous solution with the addition of an organic binder in the form of an aqueous starch solution after the insulating body has hardened, preferably with ceramic setting.

2. Insulating body according to Claim 1, **characterized in that** the length to diameter ratio of the wollastonite fibres is at least 10:1.

3. Insulating body according to Claim 1 or 2, **characterized in that** the dried shaped part contains at least 30% by weight of wollastonite.

4. Insulating body according to one of Claims 1 to 3, **characterized in that** the filler fibres are filament fibres which do not affect the lungs, with diameters of ≥ 6 µ.

5. Insulating body according to one of Claims 1 to 4, **characterized in that** the filler fibres are inorganic fibres containing more than 18% by weight of alkali metal oxides and/or alkaline-earth metal oxides.

6. Insulating body according to one of Claims 1 to 5, **characterized in that** the content of the filler fibres in the dried shaped part is at most 40% by weight.

7. Process for manufacturing vacuum-formed refractory shaped parts with a relative density of < 0.8 g/cm³ for the purpose of high-temperature insulation at an application temperature of up to 1250°C, as is suitable in particular for the manufacture of insulating bodies according to one or more of Claims 1 to 6, in which wollastonite (Ca₃[Si₃O₉] ) with an acicular, fibrous crystal form is mixed with water and a binder to form a slurry, is introduced into a mould, the liquid is extracted and the shaped part formed in this way is dried, **characterized in that** the binder used is silica sols or alumina sols in aqueous solution with the addition of an organic binder in the form of an aqueous starch solution.

8. Process according to Claim 7, **characterized in that** further inorganic filler fibres are added to the wollastonite or slurry.

9. Process according to Claim 7 or 8, **characterized in that** the length to diameter ratio of the wollastonite fibres is at least 10:1.

10. Process according to one of Claims 7 to 9, **characterized in that** the dried shaped part contains at least 30% by weight of wollastonite.

11. Process according to one of Claims 7 to 10, **characterized in that** filament fibres which do not affect the lungs and have a diameter of ≥ 6 µ are used as filler fibres together with wollastonite.

12. Process according to one of Claims 7 to 11, **characterized in that** the filler fibres used are inorganic fibres which contain more than 18% by weight of alkali metal oxides and/or alkaline-earth metal oxides.

13. Process according to one of Claims 7 to 12, **characterized in that** the content of filler fibres in the dried shaped part is at most 40% by weight.

14. Process according to one of Claims 7 to 13, **characterized in that** the hardening of the shaped parts is carried out by drying at temperatures between 100°C and 200°C and preferably ceramic setting.

15. Process according to one of Claims 7 to 14, **characterized in that** the extraction of the liquid is carried out by means of vacuum technology at a reduced pressure of ≤ 1 bar without pressing.

16. Process according to one of Claims 7 to 15, **characterized in that** the solids concentration of the slurry in the mixer tank/shaping well is 1 to 10% by weight, preferably 3 to 6% by weight.

17. Process according to one of Claims 7 to 16, **characterized in that** the binder content in the dried shaped part is between 10 and 40% by weight.

## Revendications

1. Corps isolant destiné à l'isolation à haute température jusqu'à 1250°C, qui est constitué de wollastonite de préférence naturelle de forme cristalline fibreuse aciculaire, d'un liant et, le cas échéant, de charges fibreuses inorganiques et qui présente à l'état sec une masse volumique inférieure à 0,8 g/cm³, de préférence inférieure à 0,5 g/cm³, **caractérisé en ce que** la proportion de liant dans la pièce moulée séchée s'élève avantageusement entre 10 et 40 % en poids et cette teneur en liant est produite à partir d'une association de sols de silice ou de sols d'alumine en solution aqueuse avec addition d'un liant organique sous forme d'une solution aqueuse d'amidon après durcissement du corps isolant, de préférence avec prise céramique.

2. Corps isolant suivant la revendication 1, **caractérisé en ce que** le rapport de la longueur au diamètre des fibres de wollastonite s'élève au moins à 10:1.

3. Corps isolant suivant la revendication 1 ou 2, **caractérisé en ce que** la pièce moulée séchée contient au moins 30 % en poids de wollastonite.

4. corps isolant suivant l'une des revendications 1 à 3, **caractérisé en ce que** les fibres de la charge consistent en fibres filamenteuses non accessibles aux poumons, ayant un diamètre égal ou supérieur à 6 µm.

5. Corps isolant suivant l'une des revendications 1 à 4, **caractérisé en ce que** les fibres de la charge sont des fibres inorganiques avec une proportion de plus de 18 % en poids d'oxydes alcalins et/ou d'oxydes alcalino-terreux.

6. Corps isolant suivant l'une des revendications 1 à 5, **caractérisé en ce que** la proportion de fibres de la charge dans la pièce moulée à l'état sec s'élève au maximum à 40 % en poids.

7. Procédé de fabrication de pièces réfractaires moulées sous vide de poids spécifique inférieur à 0,8 g/cm³ en vue de l'isolation à haute température, jusqu'à une température d'utilisation de 1250°C comme cela convient en particulier pour la production de corps isolants selon une ou plusieurs des revendications 1 à 6, dans lequel de la wollastonite (Ca₃[Si₃O₉] ) sous forme de cristaux fibreux aciculaires est mélangée avec de l'eau et un liant pour former une suspension qui est chargée dans un moule, le liquide est éliminé par filtration par succion et la pièce moulée ainsi formée est séchée, **caractérisé en ce que** des sols de silice ou des sols d'alumine sont utilisés comme liants en solution aqueuse avec addition d'un liant organique sous forme d'une solution aqueuse d'amidon.

8. Procédé suivant la revendication 7, **caractérisé en ce que** d'autres fibres inorganiques sont ajoutées comme charge à la wollastonite ou à la suspension.

9. Procédé suivant la revendication 7 ou 8, **caractérisé en ce que** le rapport de la longueur au diamètre des fibres de wollastonite est au moins égal à 10:1.

10. Procédé suivant l'une des revendications 7 à 9, **caractérisé en ce que** la pièce moulée séchée contient au moins 30 % en poids de wollastonite.

11. Procédé suivant l'une des revendications 7 à 10, **caractérisé en ce qu'**on utilise comme charges fibreuses des fibres filamenteuses non accessibles aux poumons ayant un diamètre égal ou supérieur à 8 µm conjointement avec la wollastonite.

12. Procédé suivant l'une des revendications 7 à 11, **caractérisé en ce qu'**on utilise comme charges fibreuses des fibres inorganiques contenant une proportion de plus de 18 % en poids d'oxydes alcalins et/ou d'oxydes alcalino-terreux.

13. Procédé suivant l'une des revendications 7 à 12, **caractérisé en ce que** la proportion de fibres constituant la charge dans la pièce moulée séchée s'élève au maximum à 40 % en poids.

14. Procédé suivant l'une des revendications 7 à 13, **caractérisé en ce que** le durcissement des pièces moulées est effectué par séchage à des températures comprises entre 100°C et 200°C et de préférence par prise céramique.

15. Procédé suivant l'une des revendications 7 à 14, **caractérisé en ce que** la filtration par succion du liquide est effectuée sans application de pression au moyen de la technologie du vide à une dépression inférieure ou égale à 1 bar.

16. Procédé suivant l'une des revendications 7 à 15, **caractérisé en ce que** la concentration en matière solide de la suspension dans le réservoir du mélangeur/la cuve de formage s'élève à une valeur de 1 à 10 % en poids, de préférence de 3 à 6 % en poids.

17. Procédé suivant l'une des revendications 7 à 16, **caractérisé en ce que** la proportion de liant dans la pièce moulée séchée se situe entre 10 et 40 % en poids.
